# EUROPEAN PATENT APPLICATION

(11) **EP 2 871 040 A1**
(43) Date of publication of application: **13.05.2015**
(21) Application number: 13812538.0
(22) Date of filing: 05.07.2013
(51) Int. Cl.: B29C 65/16

(54) **WELDING METHOD AND WELD**

(30) Priority: 05.07.2012 JP 2012151710
(71) Applicant: Asahi Kasei Chemicals Corporation, Tokyo 101-8101 (JP)
(72) Inventor: SAITO Taiga, Tokyo 101-8101 (JP)
(74) Representative: O'Brien, Simon Warwick
(86) International application number: PCT/JP2013/068551
(87) International publication number: WO 2014/007382

(57) **Abstract**

Provided is a welding method for welding a first resin layer and a second resin layer, the method including interposing a metal layer having pores formed therein, between the first resin layer and the second resin layer; irradiating at least one of the first resin layer and the second resin layer with laser light; thereby causing the melted resin to penetrate through the metal layer; and thus welding the first resin layer and the second resin layer.

## Description

### Technical Field

The present invention relates to a welding method for welding a first resin layer and a second resin layer, and a weld.

### Background Art

Conventionally, there is available, as a container used in an oil strainer for filtering oil or the like, a resin mesh member interposed between a pair of resin containers.

This conventional container includes an upper member that has an inflow port for receiving oil formed thereon; a lower member that is joined to the upper member, forming an internal space with the upper member, and has a discharge port for discharging the oil received through the inflow port; and a mesh member interposed between the joint surface of the upper member and the joint surface of the lower member. In this container, a flange portion through which a bolt is inserted is formed in the outer peripheral portions of the upper member and the lower member, and as this flange portion is bolt-fastened, the joint surface of the upper member and the joint surface of the lower member are joined in a state of having a mesh member interposed between the joint surface of the upper member and the joint surface of the lower member.

However, since the conventional container needs to have a large flange portion in order to fasten the upper member and the lower member by a bolt, there have been limitations to attempt space saving.

In this regard, it may be considered to join the upper member and the lower member by vibration welding. However, when the upper member and the lower member are vibrated so as to carry out vibration welding, there is a problem that the mesh member interposed between the joint surface of the upper member and the joint surface of the lower member is twisted. Furthermore, even if it is attempted to weld the upper member and the lower member by vibrating the upper member and the lower member, only the joint surface of the upper member and the joint surface of the lower member is planed by the mesh member, and the joint surface of the upper member and the joint surface of the lower member cannot be welded.

For this reason, it has been very difficult to weld an upper member and a lower member in such a container having a mesh member interposed between an upper member and a lower member.

In regard to such problems, Patent Literature 1 describes a technology of interposing a filter element made of a resin between a flange portion of an upper member and a flange portion of a lower member, and welding the flange portion of the upper member and the flange portion of the lower member by laser welding.

### Citation List

### Patent Literature

Patent Literature 1: Japanese Patent Application Laid-Open (JP-A) No. 2006-231875

### Summary of Invention

### Technical Problem

However, since the technology described in Patent Literature 1 does not have a sufficient welding speed in a state of having a resin filter element interposed between the flange portion of the upper member and the flange portion of the lower member, there is still room for an improvement in this regard.

Thus, an object of the present invention is to provide a welding method capable of promoting an increase in the welding speed, and a weld.

### Solution to Problem

The welding method related to the present invention is a welding method for welding a first resin layer and a second resin layer, the method including interposing a metal layer having pores formed therein between the first resin layer and the second resin layer, irradiating at least one of the first resin layer and the second resin layer with laser light, thereby causing the melted resin to penetrate through the metal layer, and thus welding the first resin layer and the second resin layer.

According to the welding method related to the present invention, since a metal layer having pores formed therein is interposed between a first resin layer and a second resin layer, when laser light is irradiated on at least one of the first resin layer and the second resin layer, the melted resin enters into the pores of the metal layer, and also, this melted resin penetrates through the metal layer. Thereby, the first resin layer and the second resin layer are welded. At this time, as the metal layer absorbs a portion of the laser light irradiated, Joule heat is generated. Thereby, the heating rate of the first resin layer and the second resin layer is increased, and melting of the resin is accelerated. Therefore, the welding speed of the first resin layer and the second resin layer can be increased. Furthermore, since pores have been formed in the metal layer, the irradiated laser light can pass through the metal layer without being totally reflected by the metal layer. For this reason, inhibition of melting of the resin by the metal layer can be suppressed.

Furthermore, the present invention can be carried out by a method in which the porosity of the metal layer is from 10% to 85%. When the porosity of the metal layer is adjusted to 10% or higher, the melted resin can easily penetrate through the metal layer. Therefore, welding of the first resin layer and the second resin layer can be carried out easily. On the other hand, when the porosity of the metal layer is adjusted to 85% or lower, an amount of metal that can accelerate heating of the first resin layer and the second resin layer as far as possible can be secured. Therefore, the heating rate of the first resin layer and the second resin layer can be increased.

Furthermore, the present invention can be carried out by a method in which the metal layer is a mesh member having meshes formed therein. As such, when a mesh member is used as the metal layer, on the occasion of welding the first resin layer and the second resin layer, the melted resin can be made to easily penetrate through the metal layer, while the heating rate of the first resin layer and the second resin layer is increased.

Furthermore, the present invention can be carried out by a method in which the metal layer contains a metal having light absorption properties. As such, when a metal layer containing a metal that has light absorption properties is used, heat generation of the metal layer when irradiated with laser light can be accelerated.

Furthermore, the present invention can be carried out by a method in which the metal layer contains at least one selected from iron, aluminum, copper, titanium, nickel, tin, zinc, chromium, lead-free solder, alloys containing at least these metals, metallic materials that absorb laser light as a result of a surface treatment applied thereto and that are metals or alloys other than these metals, and materials provided with metal coating films. When a metal layer containing such a metal is used, the metal layer can be made to appropriately generate heat when irradiated with laser light.

Furthermore, the present invention can be carried out by a method in which the resin layer contains at least one selected from a styrene-based resin, an olefin-based resin, a polyester-based resin, a polycarbonate-based resin, an acrylic acid-based resin, a polyamide-based resin, an ABS resin, a modified PPE resin, a fluororesin, a thermoplastic polyimide resin, an aromatic polyether ketone, and a rubber-based resin. When a resin layer containing such a resin is used, the first resin layer and the second resin layer can be appropriately melted.

Furthermore, the present invention can be carried out by a method in which any one of the first resin layer and the second resin layer is formed of a light transmissive resin, and the other of the first resin layer and the second resin layer is formed of a light absorptive resin. When the first resin layer and the second resin layer are formed using such resins, the light absorptive resin side can be melted by irradiating laser light through the light transmissive resin side, and thereby the first resin layer and the second resin layer can be welded.

Furthermore, the present invention can also be carried out by a method in which the first resin layer and the second resin layer are formed of a light transmissive resin. Even if the first resin layer and the second resin layer are formed of such a resin, the first resin layer and the second resin layer can be welded by the heat generated by the metal layer.

Furthermore, the present invention can be carried out by a method in which the first resin layer and the second resin layer further contain a laser light absorbing material. As such, when resin layers containing a laser light absorbing material are used, even in a state where the first resin layer and the second resin layer are arranged to face each other, not only the external portion of the first resin layer and/or the second resin layer irradiated with laser light, but also the interior of the first resin layer and/or the second resin layer can be sufficiently melted by irradiating at least one of the first resin layer and the second resin layer with laser light through the external side of the first resin layer and the second resin layer. Thereby, the welding strength of the first resin layer and the second resin layer can be further increased. Furthermore, even if a flange for welding the first resin layer and the second resin layer is not formed, the first resin layer and the second resin layer can be laser-welded. Therefore, space saving can be promoted.

Furthermore, the present invention can be carried out by a method in which the first resin layer is a first container unit that has an inflow port for receiving a liquid formed therein; the second resin layer is a second container unit that forms an internal space with the first container unit, and has formed therein a discharge port for discharging the liquid that has flowed in through the inflow port; and the metal layer is a mesh member that divides the internal space into an inflow port side and a discharge port side. When such a configuration is employed, a container that filters a fluid, such as an oil strainer, can be produced.

The weld related to the present invention is such that a first resin layer and a second resin layer are welded by any one of the welding methods described above, in a state of having a metal layer interposed between the first resin layer and the second resin layer.

Furthermore, the weld related to the present invention is a weld having a first resin layer and a second resin layer welded together, the weld including a first resin layer; a second resin layer; and a metal layer interposed between the first resin layer and the second resin layer, in which the metal layer has pores formed therein, the first resin layer and the second resin layer are welded with the metal layer interposed therebetween, and a welded section that welds the first resin layer and the second resin layer penetrates through the metal layer.

### Advantageous Effects of Invention

According to the present invention, an increase in the welding speed can be promoted.

### Brief Description of Drawings

Fig. 1 is a front view diagram of an oil strainer related to an exemplary embodiment.
Fig. 2 is a plan view diagram of the oil strainer related to the exemplary embodiment.
Fig. 3 is a cross-sectional diagram of the oil strainer illustrated in Fig. 1 and Fig. 2, which is cut along the III-III line.
Fig. 4 is a cross-sectional diagram of the oil strainer illustrated in Fig. 3, which is cut along the IV-IV line.
Fig. 5 is a partially magnified diagram of the oil strainer illustrated in Fig. 3.
Fig. 6 is a partial magnified diagram of the oil strainer illustrated in Fig. 4.
Fig. 7 is a diagram illustrating the structure of a mesh member.
Fig. 8 is a diagram for explaining the distance of closest approach of metal powder particles.
Fig. 9 is a front view diagram of a first container unit and a second container unit according to Examples.
Fig. 10 is a bottom view diagram of a first container unit and a second container unit according to Examples.
Fig. 11 is a plan view diagram of a mesh member according to Examples.

### Description of Embodiments

Hereinafter, suitable exemplary embodiments of the welding method and weld according to the present invention are described in detail with reference to the drawings. Meanwhile, in all of the drawings, the same or equivalent parts are assigned with the same reference numerals.

### (First exemplary embodiment)

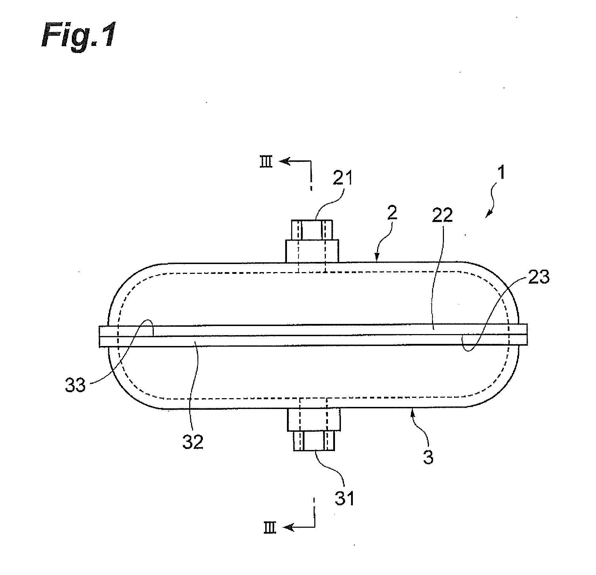

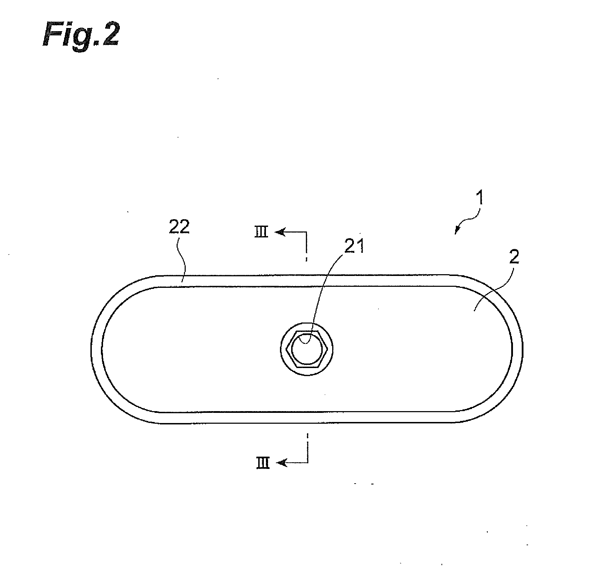

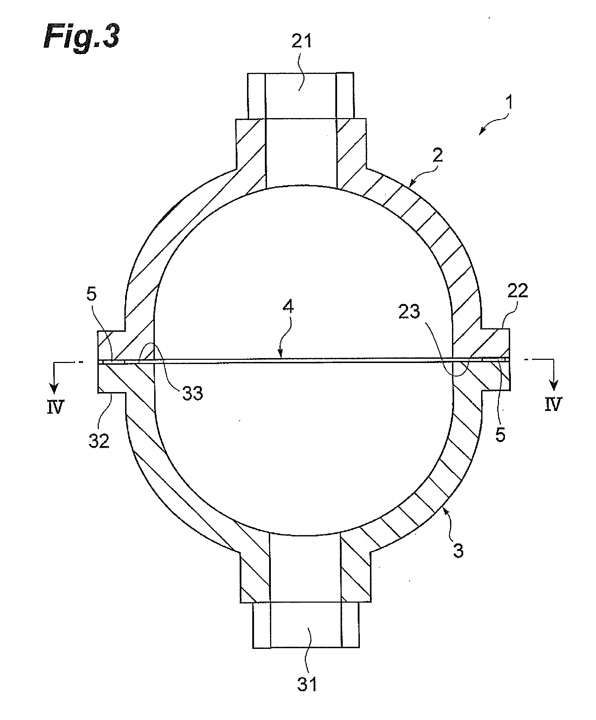

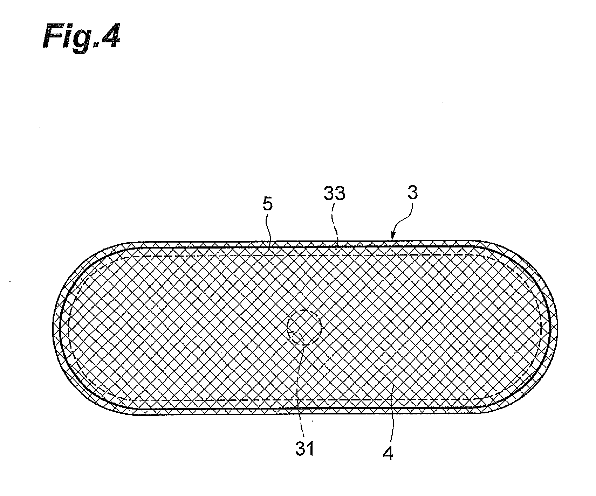

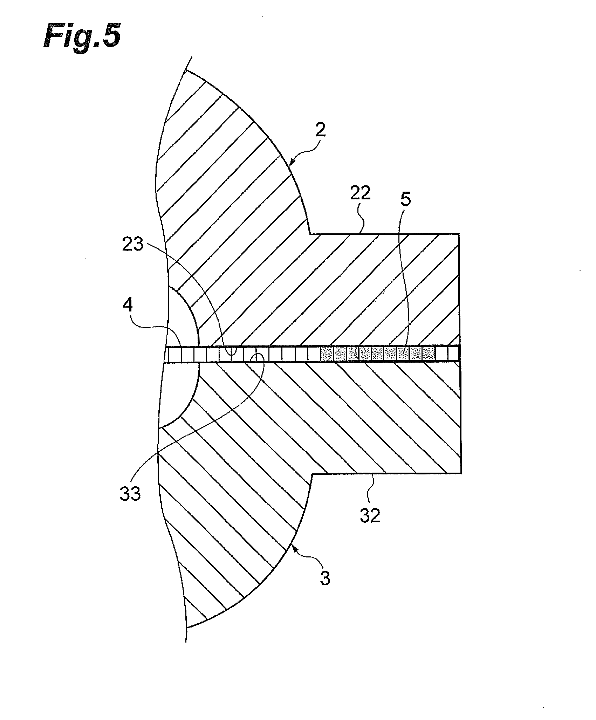

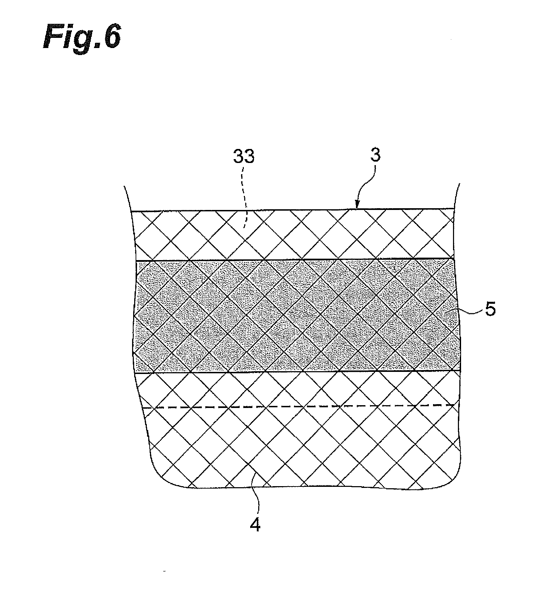

The first exemplary embodiment is to apply the present invention to an oil strainer. Fig. 1 is a front view diagram of an oil strainer related to the exemplary embodiment. Fig. 2 is a plan view diagram of the oil strainer related to the exemplary embodiment. Fig. 3 is a cross-sectional diagram of the oil strainer illustrated in Fig. 1 and Fig. 2, which is cut along the III-III line. Fig. 4 is a cross-sectional diagram of the oil strainer illustrated in Fig. 3, which is cut along the IV-IV line. Fig. 5 is a partially magnified diagram of the oil strainer illustrated in Fig. 3. Fig. 6 is a partially magnified diagram of the oil strainer illustrated in Fig. 4.

As illustrated in Fig. 1 to Fig. 3, an oil strainer 1 related to the present exemplary embodiment includes a first container unit 2 that constitutes a first resin layer; a second container unit 3 that constitutes a second resin layer; and a mesh member 4 that constitutes a metal layer. The oil strainer 1 is produced by laser welding the first container unit 2 and the second container unit 3 in a state of having the metal layer in which pores have been formed, interposed between the first container unit 2 and the second container unit 3.

The first container unit 2 is intended to form an internal space with the second container unit 3, which will be filled with fluid oil, by being joined with the second container unit 3. The first container unit 2 is a container made of a resin, and is formed in an approximate bowl shape in which the surface to be joined with the second container unit 3 is opened.

In the first container unit 2, an inflow port 21 for receiving oil into the internal space is formed. The position of formation of the inflow port 21 is not particularly limited, and can be set at any position in the first container unit 2. Meanwhile, in the diagram, the inflow port 21 is formed at a position opposite to the opening of the first container unit 2.

At the end edge on the opening side of the first container unit 2, a joint portion 22 that forms an opening and is joined with the second container unit 3 is formed. In the joint portion 22, a joint surface 23 that is joined with the second container unit 3 is formed. The joint surface 23 is formed in an approximately planar shape, from the viewpoint of enhancing the joinability with the second container unit 3. Furthermore, the joint portion 22 may also be formed in a flange shape that extends to the exterior of the first container unit 2 along the joint surface 23, from the viewpoint of enlarging the area of the joint surface 23. Meanwhile, the joint portion 22 may not be necessarily formed in a flange shape.

The second container unit 3 is intended to form an internal space with the first container unit 2, which will be filled with fluid oil, by being joined with the first container unit 2. The second container unit 3 is a container made of a resin, and is formed in an approximate bowl shape in which the surface to be joined with the first container unit 2 is opened.

In the second container unit 3, a discharge port 31 for discharging the oil received into the internal space is formed. The position of formation of the discharge port 31 is not particularly limited, and can be set at any position in the second container unit 3. Meanwhile, in the diagram, the discharge port 31 is formed at a position opposite to the opening of the second container unit 3.

At the end edge on the opening side of the second container unit 3, a joint portion 32 that forms an opening and is joined with the first container unit 2 is formed. Formed in the joint portion 32 is a joint surface 33 that is joined with the first container unit 2. The joint surface 33 is formed in an approximately planar shape, from the viewpoint of enhancing the joinability with the first container unit 2. Furthermore, the joint portion 32 may also be formed in a flange shape that extends to the exterior of the second container unit 3 along the joint surface 33, from the viewpoint of enlarging the area of the joint surface 33. Meanwhile, the joint portion 32 may not be necessarily formed in a flange shape.

The resins that form the first container unit 2 and the second container unit 3 are not particularly limited as long as the resins are thermoplastic. Furthermore, the resins that form the first container unit 2 and the second container unit 3 may be identical or may be different; however, from the viewpoint of laser welding, it is preferable to use a light transmissive resin in any one of the first container unit 2 and the second container unit 3, and to use a light absorptive resin in the other of the first container unit 2 and the second container unit 3. However, it is also acceptable to use a light transmissive resin in both the first container unit 2 and the second container unit 3.

The resins that form the first container unit 2 and the second container unit 3 are not particularly limited as long as they are thermoplastic; however, the resins may each include at least one selected from a styrene-based resin, an olefin-based resin, a polyester-based resin, a polycarbonate-based resin, an acrylic acid-based resin, a polyamide-based resin, an ABS resin, a modified PPE resin, a fluororesin, a thermoplastic polyimide resin, an aromatic polyether ketone, a rubber-based resin, and the like. Among these, a polyamide-based resin and a polyolefin-based resin are preferred from the viewpoints of economic efficiency and general purpose usability. Specific examples of the styrene-based resin include polystyrene. Specific examples of the olefin-based resin include polyethylene, polypropylene, an ethylene-propylene copolymer, and an ethylene-vinyl acetate copolymer. Specific examples of the polyester-based resin include polyethylene terephthalate, polymethylene terephthalate, and polybutylene terephthalate. Specific examples of the polycarbonate-based resin include polycarbonate, and a polycarbonate-ABS alloy resin. Specific examples of the acrylic acid-based resin include polymethyl methacrylate, and an acrylic acid-acrylic acid ester copolymer. Specific examples of the polyamide-based resin include polyamide (PA)6, PA11, PA12, PA66, PA610, PA6T, PA6I, and PA9T. Specific examples of the modified PPE resin include polymer alloys of PPE with any one selected from the group consisting of polystyrene, polyamide and polypropylene. Specific examples of the fluororesin include polytetrafluoroethylene, polychlorotrifluoroethylene, polyvinylidene fluoride, a perfluoroalkoxy fluororesin, an ethylene tetrafluoride-propylene hexafluoride copolymer, and an ethylene-ethylene tetrafluoride copolymer. Specific examples of the rubber-based resin include a styrene-based thermoplastic elastomer, a polyolefin-based thermoplastic elastomer, a polyamide-based thermoplastic elastomer, a polyester-based thermoplastic elastomer, and a polyurethane thermoplastic elastomer.

In the case of using a light absorptive resin, a product obtained by coloring the resin or material described above with a pigment or a dye, such as carbon black or nigrosin, can be used.

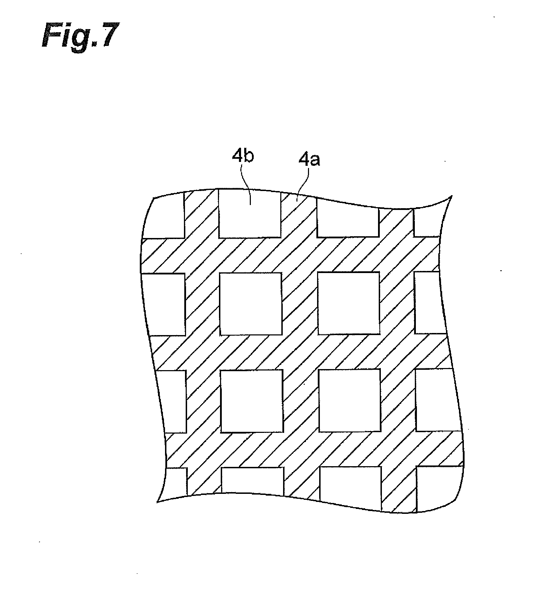

As illustrated in Fig. 3 to Fig. 6, the mesh member 4 is disposed between the first container unit 2 and the second container unit 3, and is intended to filter the oil received from the inflow port 21 of the first container unit 2 and discharge the oil through the discharge port 31 of the second container unit 3. The mesh member 4 is formed into a mesh structure based on metal (metal wires). Therefore, as illustrated in Fig. 7, the mesh member 4 has gaps 4b formed in the mesh of the metal wires 4a that are disposed in a lattice form.

The mesh member 4 is formed in a shape that covers all of the opening of the first container unit 2 and the opening of the second container unit 3, and the periphery of the mesh member 4 is interposed between the joint surface 23 of the first container unit 2 and the joint surface 33 of the second container unit 3. Therefore, in the mesh member 4, one surface side (front surface side) of the periphery is abutting onto the joint surface 23 of the first container 2, and the other surface side (back surface side) of the periphery is abutting onto the joint surface 33 of the second container unit 3.

Here, when the mesh member 4 is interposed between the first container unit 2 and the second container unit 3, and laser light is irradiated through the light transmissive resin side between the first container unit 2 and the second container unit 3, the light absorptive resin side between the first container unit 2 and the second container unit 3 melts. Then, as this melted resin enters into the pores (mesh) of the mesh member 4, and also, this melted resin penetrates through the mesh member 4, the first container unit 2 and the second container unit 3 are welded. At this time, the mesh member 4 absorbs a portion of the irradiated laser light, and thereby Joule heat is generated. Since the heating rate of the first container unit 2 and the second container unit 3 is increased thereby, and melting of the resin is accelerated, the welding speed for the first container unit 2 and the second container unit 3 is increased. Furthermore, since the mesh member 4 has pores formed therein, the irradiated laser light can pass through the mesh member 4 without being totally reflected by the mesh member 4. For this reason, inhibition of melting of the resin by the mesh member 4 can be suppressed.

The porosity of the pores formed in the mesh of the mesh member 4 is preferably from 10% to 85%, more preferably from 15% to 65%, and even more preferably from 20% to 40%. This porosity is the ratio of the area of gaps 4b with respect to the area of the mesh member 4 combining the metal wires 4a and the gaps 4b (see Fig. 7). By adjusting this porosity to 10% or higher, when the first container unit 2 and the second container unit 3 are laser welded, the melted resin can easily penetrate through the mesh member 4, and thus the first container unit 2 and the second container unit 3 can be easily welded. In this case, this effect is enhanced when the porosity is further adjusted to 15% or higher, or 20% or higher. On the other hand, when the porosity of the mesh member 4 is adjusted to 85% or lower, an amount of metal that can accelerate heating of the first container unit 2 and the second container unit 3 as far as possible, can be secured. Therefore, the heating rate of the first container unit 2 and the second container unit 3 can be increased. In this case, this effect is enhanced when the porosity is further adjusted to 65% or lower, or 40% or lower.

The metal that forms the mesh member 4 is preferably a metal having light absorption properties, and the metal may include at least one selected from, for example, iron, aluminum, copper, titanium, nickel, tin, zinc, chromium, lead-free solder, alloys containing at least these metals (stainless steel, brass, aluminum alloys, phosphor bronze, and the like), metallic materials that absorb laser light as a result of a surface treatment applied thereto and that are metals or alloys other than these metals, and materials provided with metal coating films. In this case, the metal that forms the mesh member 4 or is included in the mesh member 4 is preferably a metal capable of absorbing laser light that is irradiated upon laser welding the first container unit 2 and the second container unit 3. For example, since the wavelength of the laser light that is irradiated upon laser welding is from 500 nm to 1500 nm, it is preferable to use SUS that has a high light absorptivity in this wavelength range, as the material of the mesh member 4. A high light absorptivity means that the light absorptivity is 0.35 or higher. As such, when a mesh member 4 containing a metal having absorption properties is used, heat generation of the mesh member when irradiated with laser light can be promoted.

The thickness of the mesh member 4 is not particularly limited, and can be adjusted to, for example, from 0.005 mm to 0.800 mm. In this case, the thickness of the mesh member 4 is preferably adjusted to, for example, from 0.01 mm to 0.50 mm, and more preferably from 0.05 mm to 0.30 mm. The mesh structure and the size of the mesh for the mesh member 4 are not particularly limited, and can be appropriately set in accordance with the use of the oil strainer 1 or the like.

The oil strainer 1 is such that the joint surface 23 of the first container unit 2 and the joint surface 33 of the second container unit 3 are welded on the mesh member 4. That is, the joint surface 23 of the first container unit 2 and the joint surface 33 of the second container unit 3 are welded, as the periphery of the mesh member 4 is interposed between the joint surface 23 of the first container unit 2 and the joint surface 33 of the second container unit 3, and a welded section 5 that welds the joint surface 23 of the first container unit 2 and the joint surface 33 of the second container unit 3 penetrates through the mesh member 4. The welded section 5 is an area in which the resin that has fused (melted) from at least one of the first container unit 2 and the second container unit 3 when the first container unit 2 and the second container unit 3 were laser welded, is cooled and hardened.

It is preferable that welding between the first container unit 2 and the second container unit 3 is continuously achieved along the entire periphery of the mesh member 4 on the mesh member 4. That is, it is preferable that the welded section 5 that penetrates through the mesh member 4 is continuously formed along the entire periphery of the mesh member 4. However, it is not necessarily essential that the welding between the first container unit 2 and the second container unit 3 be continuously achieved, and the welding may be achieved intermittently. That is, it is not necessarily essential that the welded section 5 be formed continuously, and the welded section 5 may be formed intermittently.

Next, the method for producing the oil strainer 1, that is, the method for welding the first container unit 2 and the second container unit 3, is explained.

First, a first container unit 2, a second container unit 3, and a mesh member 4 are provided.

Next, the periphery of the mesh member 4 is interposed between the joint surface 23 of the first container unit 2 and the joint surface 33 of the second container unit 3, and the joint surface 23 of the first container unit 2 and the joint surface 33 of the second container unit 3 are arranged to face each other.

Next, the joint surface 23 of the first container unit 2 and the joint surface 33 of the second container unit 3 are laser welded on the mesh member 4. In regard to the laser welding, first, the first container unit 2 is irradiated with laser light such that the laser light is focused in the vicinity of the joint surface 23 onto which the mesh member 4 is abutting. Then, the resin in the vicinity of the focal point melts, and this melted resin flows out from the joint surface 23 of the first container unit 2 to the joint surface 33 of the second container unit 3 through the mesh member 4. Thereafter, when the melted resin reaches the joint surface 33, irradiation of laser light is stopped, and the melted resin is cooled and hardened. Then, the welded section 5 that is welded to the joint surface 23 of the first container unit 2 and the joint surface 33 of the second container unit 3 by penetrating through the mesh member 4 is formed between the joint surface 23 of the first container unit 2 and the joint surface 33 of the second container unit 3.

The oil strainer 1 produced in this manner is such that the joint surface 23 of the first container unit 2 and the joint surface 33 of the second container unit 3 are welded on the mesh member 4, and also, the welded section 5 that welds the joint surface 23 of the first container unit 2 and the joint surface 33 of the second container unit 3 penetrates through the mesh member 4.

As discussed above, according to the present exemplary embodiment, when at least one of the first container unit 2 and the second container unit 3 is irradiated with laser light in order to interpose a mesh member 4 having pores formed therein, between the first container unit 2 an the second container unit 3, the melted resin enters into the pores of the mesh member 4, and also this melted resin penetrates through the mesh member 4. Thereby, the first container unit 2 and the second container unit 3 are welded. At this time, as the mesh member 4 absorbs a portion of the irradiated laser light, Joule heat is generated. Since the heating rate of the first container unit 2 and the second container unit 3 is increased thereby, and melting of the resin is promoted, the welding speed of the first container unit 2 and the second container unit 3 can be increased. Furthermore, since the mesh member 4 has pores formed therein, the irradiated laser light can pass through the mesh member 4 without being totally reflected by the mesh member 4. Therefore, inhibition of melting of the resin by the mesh member 4 can be suppressed.

### (Second exemplary embodiment)

Next, a second exemplary embodiment is explained. The second exemplary embodiment is basically the same as the first exemplary embodiment, but is different from the first exemplary embodiment only in the materials of the first container unit 2 and the second container unit 3, and in the method for laser welding. For this reason, in the following descriptions, only the differences from the first exemplary embodiment will be described, while the same descriptions applicable to the first exemplary embodiment will not be repeated.

In the second exemplary embodiment, the first container unit 2 and the second container unit 3 are formed using a light semitransmissive resin that is used in the ACW (Absorbance Control Welding) method. The ACW method is a laser welding method that has been suggested by Orient Chemical Industries Co., Ltd. (see Japanese Patent No. 4102424). Specifically, it is a method in which a light semitransmissive resin having an absorbance of 0.07 to 3.0 is produced by incorporating a laser light absorbing material or the like into a thermoplastic resin, this light semitransmissive resin is caused to absorb at least a portion of laser light, and thereby a light semitransmissive resin of the same materials is laser welded.

An example of the light semitransmissive resin that forms the first container unit 2 and the second container unit 3 may be a product obtained by incorporating a laser light absorbing material into a polyamide resin composition formed from one kind or two or more kinds of polyamide resins.

Examples of the polyamide resin composition include polyamide 66 (polyhexamethylene adipamide), polyamide 6, polyamide MXD6 (poly(meta-xylene) adipamide), polyamide 6I, polyamide 6T, polyamide 9T, and polyamide M5T. These may be used as mixtures of two or more kinds thereof.

Examples of the laser light absorbing material include an azine-based compound, nigrosin, aniline black, phthalocyanine, naphthalocyanine, porphyrin, a cyanine-based compound, perylene, quaterrylene, a metal complex, an azo dye, anthraquinone, a squaric acid derivative, and an immonium dye. The content of the laser absorbing material in the thermoplastic material is preferably 0.001 to 0.8 parts by mass, and more preferably 0.01 to 0.5 parts by mass, relative to 100 parts by mass of the polyamide resin composition. If the content of the laser absorbing material is less than 0.001 parts by mass, the amount of heat generation at the time of laser welding is small, and the joint strength of the welded section 5 is prone to be insufficient. On the other hand, if the content is more than 0.8 parts by mass, the amount of heat generation at the time of laser welding is so large that scorching or voids are likely to be generated.

The thermoplastic material may also be a product obtained by optionally incorporating the following additives to a polyamide resin composition and a laser absorbing material. Examples of the kinds of the additives include a reinforcing material (for example, a glass filler), a colorant, a filler material, an ultraviolet absorbing agent, a photostabilizer, an oxidation inhibitor, an antibacterial/antifungal agent, a flame retardant, a dyeing auxiliary, a dispersant, a stabilizer, a plasticizer, a modifying agent, an antistatic agent, a lubricant, a mold releasing agent, a crystallization promoter, and a crystallization nucleating agent. These additives may be used singly, or in combination of two or more kinds thereof.

For example, the content of the glass filler can be adjusted to about 20 to 100 parts by mass relative to 100 parts by mass of the polyamide resin composition. The total amount of the other additives can be adjusted to about 0.1 to 50 parts by mass relative to 100 parts by mass of the total mass of the polyamide resin composition. According to the investigations of the present invention, although the content of the glass filler (for example, glass fibers) is about 100 parts by mass relative to 100 parts by mass of the polyamide resin composition, if a low melting point polyamide is included at a proportion of at least 40% by mass relative to 100% by mass of the polyamide resin composition, a sufficiently high joint strength can be achieved by melting of the polyamide resin by laser light irradiation.

Meanwhile, in a case in which a first member 1 and a second member 2 are formed from a thermoplastic material of the same composition, if the compositions of the polyamide resin compositions of the two thermoplastic materials are the same, the amount of incorporation of the laser absorbing material and/or the kind or the amount of incorporation of the additives may be different between the two thermoplastic materials.

Next, the method for producing an oil strainer 1, that is, the method for welding between the first container unit 2 and the second container unit 3 is explained.

First, similarly to the first exemplary embodiment, a first container unit 2, a second container unit 3, and a mesh member 4 are provided, the periphery of the mesh member 4 is interposed between the joint surface 23 of the first container unit 2 and the joint surface 33 of the second container unit 3, and the joint surface 23 of the first container unit 2 and the joint surface 33 of the second container unit 3 are arranged to face each other.

Next, the joint surface 23 of the first container unit 2 and the joint surface 33 of the second container unit 3 are laser welded. For the laser welding, for example, the method described in Japanese Patent No. 4102424 can be carried out. To specifically explain, in the process of laser welding, laser light is irradiated from the outside of the first container unit 2 and the second container unit 3 such that laser light is focused in the vicinity of the joint surface 23 of the first container unit 2 onto which the mesh member 4 is abutting.

Then, not only the exterior of the first container unit 2 irradiated with laser light, but also the interior of the first container unit 2 are sufficiently melted. This melted resin then flows out from the joint surface 23 of the first container unit 2 to the joint surface 33 of the second container unit 3 through the gaps of the mesh member 4. Thereafter, when the melted resin reaches the joint surface 33, irradiation of laser light is stopped, and thereby the melting resin is cooled and hardened. Then, a welded section 5 that is welded to the joint surface 23 of the first container unit 2 and the joint surface 33 of the second container unit 3 by penetrating through the mesh member 4, is formed between the joint surface 23 of the first container unit 2 and the joint surface 33 of the second container unit 3.

At this time, the conditions for the irradiation of laser light are appropriately set such that the first container unit 2 that is irradiated with laser light generates sufficient heat, and melting spreads sufficiently, to the extent that the first container unit to be irradiated with laser light is not subjected to scorching or void generation. Examples of the conditions for the irradiation of laser light include the laser output power and the irradiation time (rate of irradiation) of laser light.

In a case in which laser welding is conducted continuously along the entire periphery of the mesh member 4, it is preferable to irradiate laser light while the first container unit 2 and the second container unit 3 are rotated. As such, in the case of rotating the first container unit 2 and the second container unit 3, the laser light irradiation time (rate of irradiation) can be set based on the speed of rotation of the first container unit 2 and the second container unit 3.

Regarding the wavelength of the laser light irradiated, infrared radiation having a wavelength of from 800 nm to 1600 nm, and preferably laser light having an oscillation wavelength of from 800 nm to 1100 nm, can be used. For example, a solid laser (Nd:YAG excitation, semiconductor laser excitation or the like), a semiconductor laser, a tunable diode laser, or a titanium sapphire laser (Nd:YAG excitation) can be used. Alternatively, a halogen lamp or a xenon lamp, both of which generate infrared radiation having a wavelength of 700 nm or more, may also be used.

The oil strainer 1 produced in this manner is such that the joint surface 23 of the first container unit 2 and the joint surface 33 of the second container unit 3 are welded on the mesh member 4, and also, the welded section 5 that welds the joint surface 23 of the first container unit 2 and the joint surface 33 of the second container unit 3 penetrates through the mesh member 4.

As discussed above, according to the present exemplary embodiment, the following effects are further obtained in addition to the first exemplary embodiment. That is, by making the first container unit 2 and the second container unit 3 with a light semitransmissive resin obtained by incorporating a laser absorbing material or the like into a polyamide resin composition, even if the first container unit 2 and the second container unit 3 are arranged to face each other, when the first container unit 2 is irradiated with laser light from the outside of the first container unit 2 and the second container unit 3, the exterior of the first container unit 2 irradiated with laser light as well as the interior of the first container unit 2 can be sufficiently melted. Thereby, the welding strength of the first container unit 2 and the second container unit 3 can be further increased. Furthermore, even though flanges for welding are not formed in the first container unit 2 and the second container unit 3, and even without depending on the irradiation angle of laser light, the first container unit 2 and the second container unit 3 can be laser welded. Therefore, space saving can be promoted.

### (Third exemplary embodiment)

Next, a third exemplary embodiment is explained.

The third exemplary embodiment relates to a welding method for interposing a metal layer having pores formed therein between a first resin layer and a second resin layer, and welding the first resin layer and the second resin layer.

For the first resin layer and the second resin layer, the same resins as those used in the first container unit 2 and the second container unit 3 of the first exemplary embodiment or the second exemplary embodiment, can be used.

The metal layer may have any shape as long as the metal layer has pores formed therein. Regarding the metal layer, for example, the same mesh member as the mesh member 4 of the first exemplary embodiment and the second exemplary embodiment, as well as a metal wire or a metal powder can be used.

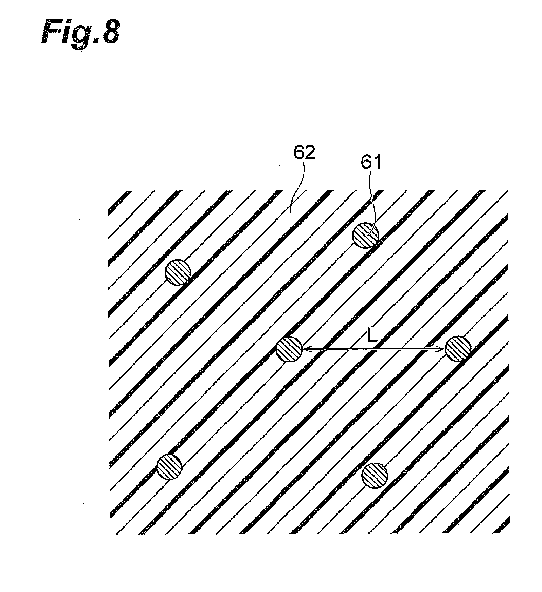

When a metal powder is used as the metal layer, the metal layer is easily interposed between the first resin layer and the second resin layer by incorporating the metal powder into a medium such as a coating material, and applying this medium on the first resin layer and/or the second resin layer. In this case, the average value of the distance of closest approach of the metal powder that is incorporated into the medium is preferably from 0.001 µm to 300 µm, more preferably from 0.005 µm to 200 µm, and even more preferably from 0.01 µm to 100 µm. Here, the distance of closest approach of the metal powder means, as illustrated in Fig. 8, the separation distance (spatial distance) from a certain metal particle to another metal particle at the closest position. Measurement of the distance of closest approach of metal particles can be carried out by, for example, SEM. By adjusting the average value of this distance of closest approach to 0.001% or more, when the first resin layer and the second resin layer are laser welded, the melted resin can easily penetrate through the metal layer. Therefore, the first resin layer and the second resin layer can be easily welded. In this case, when the average value of the distance of closest approach is further adjusted to from 0.005 µm to 0.01 µm, this effect is enhanced. On the other hand, when the average value of the distance of closest approach is adjusted to 300 µm or less, an amount of metal that can promote heating of the first resin layer and the second resin layer as far as possible can be secured in the metal layer. Therefore, the heating rate of the first resin layer and the second resin layer can be increased. In this case, this effect is enhanced by further adjusting the average value of the distance of closest approach to 200 µm or less, or 100 µm or less.

Next, the method for welding between the first resin layer and the second resin layer is explained.

First, similarly to the first exemplary embodiment, a first resin layer, a second resin layer, and a metal layer are provided, the metal layer is interposed between the first resin layer and the second resin layer, and the first resin layer and the second resin layer are arranged to face each other.

Next, the first resin layer and the second resin layer are laser welded. Laser welding can be carried out by the same method as that used in the first exemplary embodiment or the second exemplary embodiment.

Then, the first resin layer irradiated with laser light melts, and this melted resin flows out from the first resin layer to the second resin layer through the gaps of the metal layer. Thereafter, when the melted resin reaches the second resin layer, irradiation of laser light is stopped, and the melted resin is cooled and cured. Then, a welded section in which the first resin layer and the second resin layer are welded through the metal layer, is formed between the first resin layer and the second resin layer.

A weld welded in this manner is such that as the welded section that welds the first resin layer and the second resin layer penetrates through the metal layer, the first resin layer and the second resin layer are welded, with the metal layer interposed therebetween.

Thus, suitable exemplary embodiments of the present invention have been explained, but the present invention is not intended to be limited to the exemplary embodiments.

For example, the first and second exemplary embodiments have been explained using oil strainers as the application examples of the present invention; however, the present invention is not intended to be limited to oil strainers, and can be applied to various other members. Furthermore, the fluid is not intended to be limited to oil, and other various liquids and gases can be employed.

Furthermore, in the first and second exemplary embodiments, it has been explained that the welding between the first container unit 2 and the second container unit 3 is carried out only on the mesh member 4. However, it is acceptable as long as the welding between the first container unit 2 and the second container unit 3 is carried out at least on the mesh member 4, and the welding may also be carried out at a position deviated from the mesh member 4.

Furthermore, in the first and second exemplary embodiments, it has been explained that when the first container unit 2 and the second container unit 3 are laser welded, the resin may be melted by focusing the laser light on the first container unit 2; however, it is acceptable if the resin is melted by focusing laser light on at least one of the first container unit 2 and the second container unit 3.

Furthermore, in the first and second exemplary embodiments, it has been explained that the entirety of the first container unit 2 and the second container unit 3 is made of resin; however, it is acceptable if at least the surface that joins the first container unit 2 and the second container unit 3 is made resin.

### EXAMPLES

Next, Examples of the present invention are explained. Meanwhile, the present invention is not intended to be limited to the following Examples.

### (Examples 1 to 4 and Comparative Example 1)

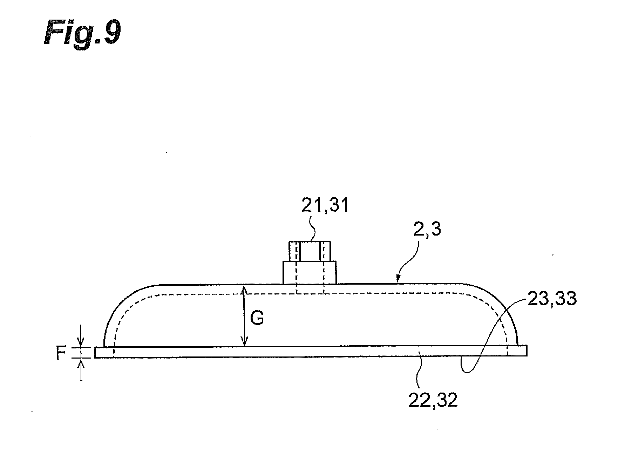

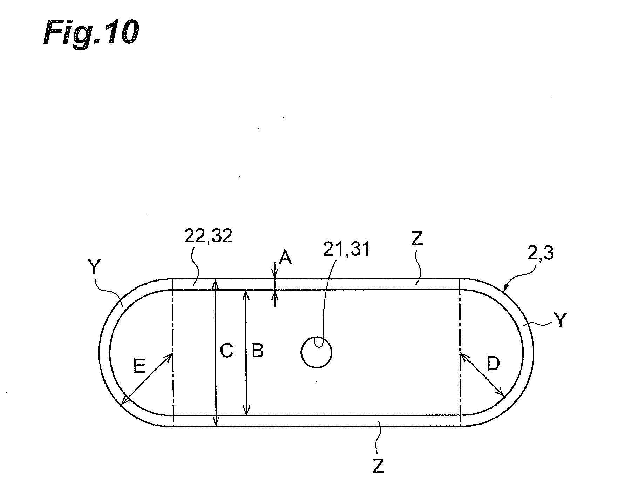

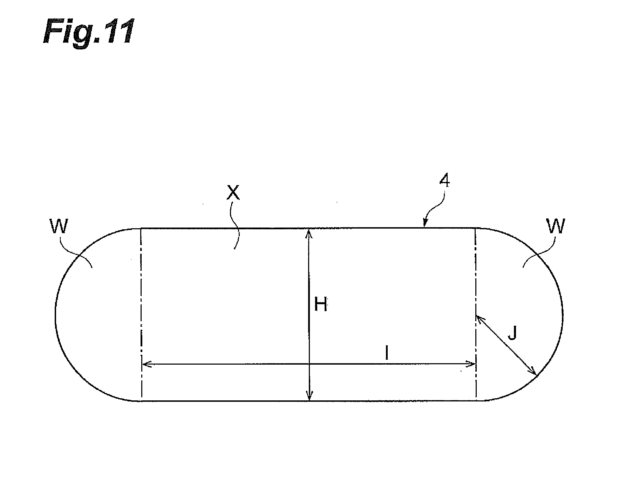

Fig. 9 is a front view diagram of a first container unit and a second container unit according to Examples. Fig. 10 is a bottom view diagram of a first container unit and a second container unit according to Examples. Fig. 11 is a plan view diagram of a mesh member according to Examples.

As illustrated in Fig. 9 and Fig. 10, the first container unit 2 and the second container unit 3 had a shape of a slender capsule bisected along the longitudinal direction, and had a shape including a pair of linear-shaped surface sections Z in which the joint surface 23 of the first container unit 2 and the joint surface 33 of the second container unit 3 were arranged in parallel; and a pair of semicircular-shaped surface sections Y that were respectively connected to the pair of linear-shaped surface sections Z. At the joint surface 23 and the joint surface 33, the width A of the linear-shaped surface sections Z and the semicircular-shaped surface sections Y was set to 5.0 mm; the inner distance B of the pair of linear-shaped surface sections Z was set to 55.0 mm; the external distance C of the pair of linear-shaped surface sections Z is set to 65.0 mm; the internal radius D of the semicircular-shaped surface section Y was set to 27.5 mm; and the external radius E of the semicircular-shaped surface section Y was set to 32.5 mm. Furthermore, in the first container unit 2 and the second container unit 3, the thickness F of the connection was set to 3.5 mm; and the height G from the connection to the apices of the first container unit 2 and the second container unit 3 was set to 27.5 mm. For the materials of the first container unit 2 and the second container unit 3, the same material of polyamide 66 (PA66) was used, and one side was made light transmissive, while the other side was made light absorptive by coloring with nigrosin, which is a light absorbing material.

As illustrated in Fig. 11, the mesh member 4 was made into a shape including a rectangular section X, and a pair of semicircular sections W that are connected to the two ends in the short direction of the rectangular section X, and two kinds thereof, such as a large-sized one and a small-sized one, were provided. In the large-sized mesh member 4, the width H in the short direction of the rectangular section X was set to 66.0 mm; the length I in the longitudinal direction of the rectangular section X was set to 195.0 mm; the radius J of the semicircular section W was set to 33.0 mm; and the thickness was set to 0.1 mm. In the small-sized mesh member 4, the width H in the short direction of the rectangular section X was set to 59.0 mm; the length I in the longitudinal direction of the rectangular section X was set to 188.0 mm; the radius J of the semicircular section W was set to 29.5 mm; and the thickness was set to 0.1 mm. Stainless steel (SUS) was used as the material for both the large-sized and small-sized mesh members 4.

In Example 1, the large-sized mesh member 4 was interposed between the joint surface 23 of the first container unit 2 and the joint surface 33 of the second container unit 3, and the first container unit 2 and the second container unit 3 were laser welded. The conditions for laser welding were such that the laser output power was set to 100 W; the scan speed of the laser was 20.0 mm/s; the focal diameter (diameter) of laser light was set to φ 3.2 mm; and the number of runs of laser light irradiation for the first container unit 2 and the second container unit 3 was set to 1.

In Example 2, the large-sized mesh member 4 was interposed between the joint surface 23 of the first container unit 2 and the joint surface 33 of the second container unit 3, and the first container unit 2 and the second container unit 3 were laser welded. The conditions for laser welding were such that the laser output power was set to 100 W; the scan speed of the laser was 20.0 mm/s; the focal diameter (diameter) of laser light was set to φ 3.2 mm; and the number of runs of laser light irradiation for the first container unit 2 and the second container unit 3 was set to 2.

In Example 3, the small-sized mesh member 4 was interposed between the joint surface 23 of the first container unit 2 and the joint surface 33 of the second container unit 3, and the first container unit 2 and the second container unit 3 were laser welded. The conditions for laser welding were such that the laser output power was set to 100 W; the scan speed of the laser was 20.0 mm/s; the focal diameter (diameter) of laser light was set to φ 3.2 mm; and the number of runs of laser light irradiation for the first container unit 2 and the second container unit 3 was set to 1.

In Example 4, the small-sized mesh member 4 was interposed between the joint surface 23 of the first container unit 2 and the joint surface 33 of the second container unit 3, and the first container unit 2 and the second container unit 3 were laser welded. The conditions for laser welding were such that the laser output power was set to 100 W; the scan speed of the laser was 20.0 mm/s; the focal diameter (diameter) of laser light was set to φ 3.2 mm; and the number of runs of laser light irradiation for the first container unit 2 and the second container unit 3 was set to 2.

In Comparative Example 1, the first container unit 2 and the second container unit 3 were laser welded without interposing a mesh member 4 between the joint surface 23 of the first container unit 2 and the joint surface 33 of the second container unit 3. The conditions for laser welding were such that the laser output power was set to 100 W; the scan speed of the laser was 20.0 mm/s; the focal diameter (diameter) of laser light was set to φ 3.2 mm; and the number of runs of laser light irradiation for the first container unit 2 and the second container unit 3 was set to 1.

Thereafter, a fracture test was carried out for Examples 1 to 4 and Comparative Example 1. In the fracture test, the discharge port 31 of the second container unit 3 was blocked, water was introduced through the inflow port 21 of the first container unit 2, and the pressure at the time when fracture of the container 1 or water leakage occurred was measured as the burst strength.

As indicated in Table 1, all of the Examples were comparable to Comparative Example 1. From these results, it was confirmed that in Examples as well, the first container unit 2 and the second container unit 3 were reliably welded.

**[Table 1]**

| | Example | | | | Comparative Example |
|---|---|---|---|---|---|
| Mesh member | Large-sized | | Small-sized | | None |
| Burst strength (MPa) | 0.84 | 0.66 | 0.88 | 1.16 | 0.73 |

### (Example 5)

In Example 5, a half-dome-shaped first member having an opening formed at the apex was produced as a first resin layer, a flat-shaped second member was produced as a second resin layer, and a mesh member to be interposed between the first member and the second member was produced as a metal layer.

The first member and the second member were produced using a light semitransmissive resin that is used in the ACW method.

On the occasion of the production of the first member and the second member, first, polyamide 66 pellets were prepared. In the preparation of polyamide 66 pellets, 3% by mass of potassium iodide and 0.1% by mass of copper iodide were introduced into a 40% aqueous solution of AH salt (equimolar salt of adipic acid and hexamethylenediamine) in a 400-L autoclave, and heating and melt polymerization was carried out at an added pressure of 1.8 MPa. A polymer thus obtained was subjected to cooling solidification and granulation, and thereby pellets of polyamide 66 were obtained.

Next, 64.5 parts by mass of the pellets of polyamide 66, 33 parts by mass of glass fibers (manufactured by Nippon Electric Glass Co., Ltd., trade name: T275H), and 2.5 parts by mass of a colored master batch for laser welding (manufactured by Orient Chemical Industries Co., Ltd., trade name: eBIND ACW-9871) were melt kneaded using a twin-screw extruder (manufactured by Toshiba Machine Co., Ltd., trade name: TEM35) set at a barrel temperature of 290°C. Thus, pellets of a thermoplastic material were obtained.

Next, the pellets of the thermoplastic material were introduced into an injection molding machine (manufactured by Sumitomo Heavy Industries, Ltd., trade name: SE130) set at a cylinder temperature of 290°C, and the pellets were molded at a mold temperature of 80°C. Thus, the first member and the second member were obtained.

The mesh member was produced using a mesh No. 200 made of SUS (stainless steel). The gap ratio of the mesh member was 35%.

Then, the mesh member was interposed between the first member and the second member, the first member and the second member were laser welded by the ACW method, and thus a hollow article was produced. At this time, the laser output power was set to 130 W, the WD (distance from the laser irradiation optical system to the surface of the irradiated side of the first member) was set to 83 mm, and the welding speed was set to 35 mm/s.

### (Example 6)

A first member, a second member, and a mesh member, all having the same shapes as those of Example 5, were produced as Example 6.

The first member was produced using a light absorptive resin, and the second member was produced using a light transmissive resin.

On the occasion of production of the first member, first, polyamide 66 pellets were prepared. In the preparation of the polyamide 66 pellets, 3% by mass of potassium iodide and 0.1% by mass of copper iodide were introduced into a 40% aqueous solution of AH salt (equimolar salt of adipic acid and hexamethylenediamine) in a 400-L autoclave, and heating and melt polymerization was carried out at an added pressure of 1.8 MPa. A polymer thus obtained was subjected to cooling solidification and granulation, and thereby pellets of polyamide 66 were obtained.

Next, 65.6 parts by mass of the pellets of polyamide 66, 34.1 parts by mass of glass fibers (manufactured by Nippon Electric Glass Co., Ltd., trade name: T275H), and 2.5 parts by mass of a colored master batch for laser welding (manufactured by Orient Chemical Industries Co., Ltd., trade name: eBIND resin coloring dye substance 0.3 were melt kneaded using a twin-screw extruder (manufactured by Toshiba Machine Co., Ltd., trade name: TEM35) set at a barrel temperature of 290°C. Thus, pellets of a thermoplastic material were obtained.

Next, the pellets of the thermoplastic material were introduced into an injection molding machine (manufactured by Sumitomo Heavy Industries, Ltd., trade name: SE130) set at a cylinder temperature of 290°C, and the pellets were molded at a mold temperature of 80°C. Thus, the first member was obtained.

On the occasion of production of the second member, first, polyamide 66 pellets were prepared. In the preparation of the polyamide 66 pellets, 3% by mass of potassium iodide and 0.1% by mass of copper iodide were introduced into a 40% aqueous solution of AH salt (equimolar salt of adipic acid and hexamethylenediamine) in a 400-L autoclave, and heating and melt polymerization was carried out at an added pressure of 1.8 MPa. A polymer thus obtained was subjected to cooling solidification and granulation, and thereby pellets of polyamide 66 were obtained.

Next, 67 parts by mass of the pellets of polyamide 66, 33 parts by mass of glass fibers (manufactured by Nippon Electric Glass Co., Ltd., trade name: T275H were melt kneaded using a twin-screw extruder (manufactured by Toshiba Machine Co., Ltd., trade name: TEM35) set at a barrel temperature of 290°C. Thus, pellets of a thermoplastic material were obtained.

Next, the pellets of the thermoplastic material were introduced into an injection molding machine (manufactured by Sumitomo Heavy Industries, Ltd., trade name: SE130) set at a cylinder temperature of 290°C, and the pellets were molded at a mold temperature of 80°C. Thus, the second member was obtained.

The mesh member was produced using a mesh No. 200 made of SUS (stainless steel). The gap ratio of the mesh member was 35%.

Then, the mesh member was interposed between the first member and the second member, the first member and the second member were laser welded by irradiating the first member with laser light that had penetrated through the second member, and thus a hollow article was produced. At this time, the laser output power was set to 130 W, the WD (distance from the laser irradiation optical system to the surface of the irradiated side of the first member) was set to 83 mm, the laser output power was set to 130 W, and the welding speed was set to 35 mm/s.

### (Comparative Example 2)

A first member, a second member, and a mesh member, all having the same shapes as those of Example 5, were produced as Comparative Example 2.

The first member and the second member were both produced using an aluminum alloy, which was a metal.

The mesh member was produced using a mesh No. 200 made of SUS (stainless steel). The gap ratio of the mesh member was 35%.

The mesh member was interposed between the first member and the second member, the first member and the second member were joined by caulking, and thus a hollow article was produced.

### (Air tightness test)

For Examples 5 and 6 and Comparative Example 2, an air tightness test was carried out. In the air tightness test, one end of a pressure resistant hose was connected to the opening of the first member, and the other end of the pressure resistant hose was connected to a pressure gauge-attached compressor. The hollow articles of Examples 5 and 6 and Comparative Example 2 were placed in a water tank filled with water, and the interior of each of the hollow articles was pressurized with the compressor. Then, the gauge pressure that was the pressure inside each of the hollow articles was measured, and at the gauge pressure of 0.15 MPa and 0.25 MPa, it was observed whether air bubbles leaked from the joint sections between the first member and the second member. The observation results are presented in Table 2.

**[Table 2]**

| | Example 5 | Example 6 | Comparative Example 2 |
|---|---|---|---|
| First member | Light semitransmissive resin | Light absorptive resin | Metal |
| Second member | Light semitransmissive resin | Light transmissive resin | Metal |
| Metal layer | Mesh | Mesh | Mesh |
| Leakage of air bubbles (0.15 MPa) | Absent | Absent | Present |
| Leakage of air bubbles (0.25 MPa) | Absent | Present | Absent |

As indicated in Table 2, when the gauge pressure was 0.15 MPa, Comparative Example 2 exhibited leakage of air bubbles, and Examples 5 and 6 exhibited no leakage of air bubbles. Furthermore, the gauge pressure was 0.25 MPa, Example 6 and Comparative Example 2 exhibited leakage of air bubbles, but Example 5 exhibited no leakage of air bubbles. From these results, it was confirmed that when the first member and the second member were laser welded by the ACW method, the welding strength between the first member and the second member was further increased.

### Reference Signs List

- 1: OIL STRAINER (CONTAINER)

- 2: FIRST CONTAINER UNIT
- 21: INFLOW PORT
- 22: JOINT SECTION
- 23: JOINT SURFACE
- 3: SECOND CONTAINER UNIT
- 31: DISCHARGE PORT
- 32: JOINT SECTION
- 33: JOINT SURFACE
- 4: MESH MEMBER
- 5: WELDED SECTION

## Claims

1. A welding method for welding a first resin layer and a second resin layer, the method comprising:
interposing a metal layer having pores formed therein, between the first resin layer and the second resin layer;
irradiating at least one of the first resin layer and the second resin layer with laser light, thereby causing the melted resin to penetrate through the metal layer, and thus welding the first resin layer and the second resin layer.

2. The welding method according to claim 1, wherein the porosity of the metal layer is from 10% to 85%.

3. The welding method according to claim 1 or 2, wherein the metal layer is a mesh member having meshes formed therein.

4. The welding method according to any one of claims 1 to 3, wherein the metal layer comprises a metal having light absorption properties.

5. The welding method according to any one of claims 1 to 4, wherein the metal layer comprises at least one selected from iron, aluminum, copper, titanium, nickel, tin, zinc, chromium, lead-free solder, alloys containing at least these metals, metallic materials that absorb laser light as a result of a surface treatment applied thereto and that are metals or alloys other than these metals, and materials provided with metal coating films.

6. The welding method according to any one of claims 1 to 5, wherein the resin layer comprises at least one selected from a styrene-based resin, an olefin-based resin, a polyester-based resin, a polycarbonate-based resin, an acrylic acid-based resin, a polyamide-based resin, an ABS resin, a modified PPE resin, a fluororesin, a thermoplastic polyimide resin, an aromatic polyether ketone, and a rubber-based resin.

7. The welding method according to any one of claims 1 to 6, wherein any one of the first resin layer and the second resin layer is formed of a light transmissive resin, and
the other one of the first resin layer and the second resin layer is formed of a light absorptive resin.

8. The welding method according to any one of claims 1 to 6, wherein the first resin layer and the second resin layer are formed of a light transmissive resin.

9. The welding method according to any one of claims 1 to 6, wherein the first resin layer and the second resin layer further comprises a laser absorbing material.

10. The welding method according to any one of claims 1 to 9, wherein the first resin layer is a first container unit that has an inflow port for receiving oil formed thereon;
the second resin layer is a second container unit that forms an internal space with the first container unit, and has a discharge port for discharging the oil received through the inflow port; and
the metal layer is a mesh member that divides the internal space into the inflow port side and the discharge port side.

11. A weld comprising the first resin layer and the second resin layer welded together by the welding method according to any one of claims 1 to 10, with the metal layer interposed between the first resin layer and the second resin layer.

12. A weld comprising a first resin layer and a second resin layer welded together, the weld comprising:
the first resin layer;
the second resin layer; and
a metal layer interposed between the first resin layer and the second resin layer,
wherein the metal layer has pores formed therein, and
the first resin layer and the second resin layer are welded with the metal layer interposed therebetween, while a welded section that welds the first resin layer and the second resin layer penetrates through the metal layer.
